# DEMANDE DE BREVET EUROPEEN

(11) **EP 0 797 188 A1**
(43) Date de publication de la demande: **24.09.1997**
(21) Numéro de dépôt: 97400295.8
(22) Date de dépôt: 10.02.1997
(51) Int. Cl.: G11B 5/39

(54) **Tête magnétique à forte réluctance**

(30) Priorité: 19.03.1996 FR 9603390
(71) Demandeur: SILMAG, 38524 Saint-Egrève Cedex (FR)
(72) Inventeur: Lazzari, Jean-Pierre, 38700 Corenc (FR)
(74) Mandataire: Signore, Robert

(57) **Abrégé**

Selon l'invention, les concentrateurs (19₁, 19₂) sont séparés des pièces polaires (40₁, 40₂, 22₁, 22₂) par une couche amagnétique (30) comprenant notamment une couche conductrice.

Application à l'enregistrement magnétique.

## Description

### Domaine technique

La présente invention a pour objet une tête magnétique à forte réluctance. Elle trouve une application dans l'enregistrement d'informations.

### Etat de la technique antérieure

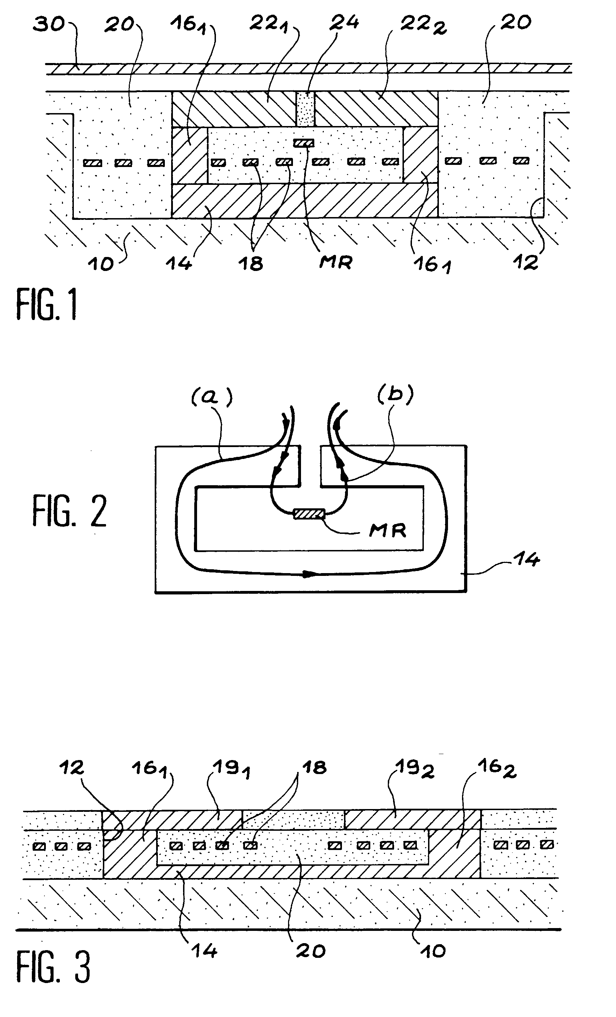

L'invention s'applique essentiellement aux têtes dites horizontales à couches minces. Une telle tête est représentée sur la figure 1 annexée.

Sur cette figure, on voit, en coupe, une tête comprenant un substrat semiconducteur 10, par exemple en silicium, dans lequel a été gravé un caisson 12 ; dans ce caisson, une couche magnétique arrière 14 a été formée électrolytiquement et a été prolongée par deux piliers verticaux 16₁, 16₂ ; un bobinage 18 entoure les piliers ; ce bobinage est noyé dans une couche isolante 20. Le circuit magnétique se complète par une pièce magnétique avant comprenant deux pièces polaires 22₁, 22₂ séparées par un espaceur amagnétique 24. Un élément magnétorésistant MR est disposé sous l'espaceur amagnétique 24. La tête se déplace devant un support magnétique 30 où sont enregistrées les informations à lire ou à écrire.

Une telle tête est décrite dans le document FR-A-2 645 314 (ou dans son correspondant américain US-A-5,208,716).

Le fonctionnement de ce dispositif est schématiquement le suivant.

A l'écriture, le courant circulant dans le bobinage 18 crée un champ magnétique et, par conséquent, une induction dans le circuit magnétique. Les lignes de champ qui s'épanouissent autour de l'espaceur induisent une aimantation dans le support 30.

A la lecture, une information magnétique enregistrée dans le support 30 produit un champ magnétique de lecture et, par conséquent, une induction dans le circuit magnétique ; cette induction se referme, en partie, à travers l'élément magnétorésistant MR. Il en résulte une rotation d'aimantation dans cet élément, qui va provoquer une variation de sa résistance.

Bien que donnant satisfaction à certains égards, de telles têtes présentent un inconvénient lié a la relative faiblesse du signal de lecture. Cette faiblesse tient essentiellement à ce que le flux magnétique de lecture ne se referme pas en totalité à travers l'élément magnétorésistant MR. En effet, à la lecture, le flux magnétique issu du support 30 se referme en empruntant deux chemins différents, comme illustré sur la figure 2 annexée :
. un chemin (a) qui emprunte la pièce polaire inférieure 14,
. un chemin (b) qui se referme à travers l'élément magnétorésistant MR.

Une partie du flux magnétique se trouve donc inutilisée dans l'étape de lecture.

Pour remédier à cet inconvénient, le document FR-A-2 657 189 préconise d'ouvrir le circuit magnétique de telle sorte que le chemin (a) mentionné ci-dessus se trouve interrompu. Le chemin (b) se trouve alors privilégié. En pratique, ce document prévoit de supprimer les piliers magnétiques 16₁, 16₂ ou même de supprimer la pièce magnétique arrière 14. Mais le signal d'écriture se trouve très affaibli par de tels bouleversements du circuit magnétique.

Le document EP-A-0 475 397 propose aussi d'ouvrir le circuit magnétique mais d'une autre manière. Il préconise de réaliser un entrefer ( gap ) dans la pièce magnétique arrière, ou deux entrefers auxiliaires dans les piliers tout en ajoutant un second circuit magnétique utilisé en lecture et apte à renforcer le flux dirigé vers l'élément magnétorésistant.

Cette solution est assez complexe et rend le procédé de réalisation de la tête long et coûteux.

La présente invention a pour but de remédier à ces inconvénients. Elle préconise encore d'augmenter la réluctance du circuit magnétique mais d'une manière beaucoup plus simple.

### Exposé de l'invention

L'invention s'applique d'abord aux têtes qui comprennent, en plus des moyens représentes sur la figure 1, deux concentrateurs de flux disposés au-dessus des deux piliers et couplés magnétiquement aux deux pièces polaires. L'invention préconise alors de séparer ces concentrateurs des pièces polaires au moyen d'une couche amagnétique. Une telle couche peut être déposée aisément en cours de réalisation, après que les concentrateurs ont été formés. Le découplage magnétique ainsi provoqué supprime de nombreuses fuites magnétiques qui perturbaient le fonctionnement des têtes antérieures à entrefers auxiliaires.

De façon précise, la présente invention a donc pour objet une tête magnétique comprenant un circuit magnétique avec deux concentrateurs magnétiques et deux pièces polaires séparées par un espaceur amagnétique et un élément magnétorésistant situé sous l'espaceur amagnétique, cette tête étant caractérisée par le fait que les deux concentrateurs sont séparées des deux pièces polaires par une couche amagnétique comprenant au moins une couche conductrice.

La couche amagnétique peut présenter une épaisseur comprise entre une fraction de micromètre et quelques micromètres.

La couche amagnétique peut être constituée d'une couche isolante (en silice par exemple) recouverte d'une couche conductrice (en cuivre, chrome, tungstène, etc...). La couche conductrice servira d'électrode dans une étape de croissance électrolytique des pièces polaires.

Comme la couche amagnétique est présente dans les deux intervalles séparant les concentrateurs des pièces polaires, la structure est bien symétrique et le signal de lecture est lui aussi symétrique.

### Brève description des dessins

· la figure 1, déjà décrite, illustre schématiquement une tête magnétique horizontale à couches minces ;
· la figure 2, déjà décrite, montre les flux magnétiques en jeu à la lecture ;
· la figure 3 illustre un premier sous-ensemble obtenu après réalisation des concentrateurs ;
· la figure 4 illustre le dépôt d'une couche amagnétique sur les concentrateurs ;
· la figure 5 montre une étape supplémentaire ;
· la figure 6 illustre l'opération de croissance électrolytique d'une partie de la pièce magnétique supérieure ;
· la figure 7 illustre une tête magnétique achevée conforme à l'invention.

### Exposé détaillé d'un mode de réalisation

Les figures 3 à 6 montrent quelques sous-ensembles obtenus au cours de la réalisation d'une tête magnétique conforme à l'invention, la tête achevée étant illustrée sur la figure 7.

Sur la figure 3, tout d'abord, on voit un premier sous-ensemble comprenant, sur un substrat 10, une pièce magnétique arrière 14, deux piliers 16₁ et 16₂, deux concentrateurs 19₁, 19₂, un enroulement conducteur 18 noyé dans un isolant 20. La forme des concentrateurs est quelconque, mais la largeur de ces pièces vers le centre de la tête est plus faible qu'au niveau des piliers.

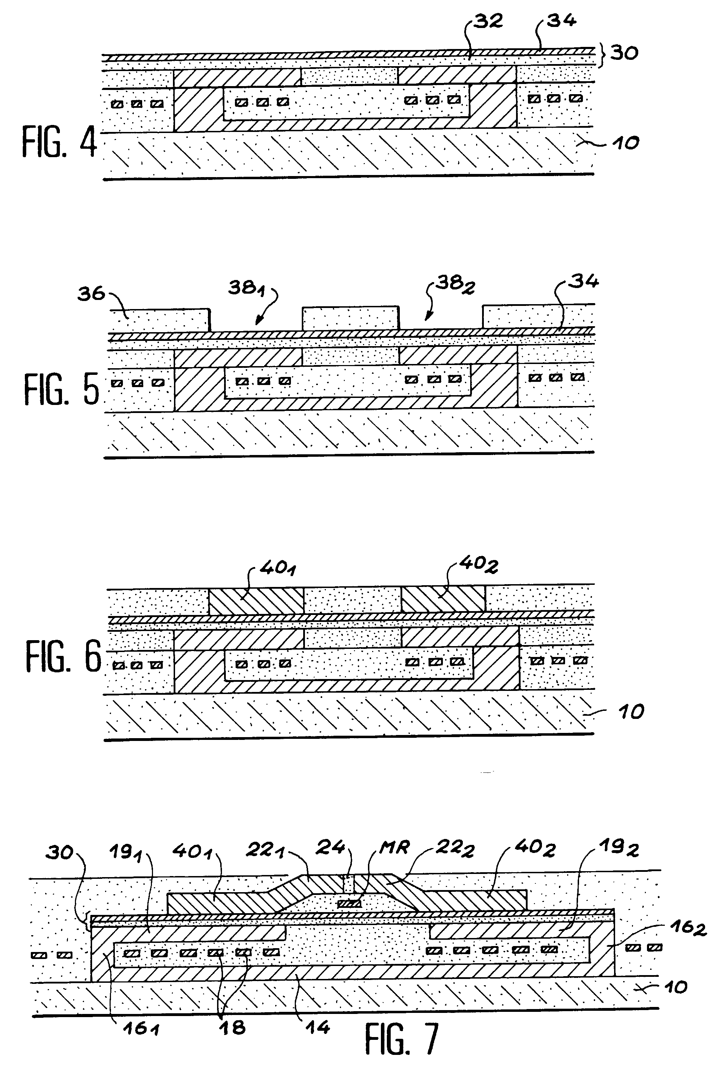

Pour obtenir une forte réluctance dans le circuit magnétique, on dépose ensuite, comme illustré sur la figure 4 une couche amagnétique 30 qui, dans la variante illustrée, comprend une couche isolante 32, par exemple en silice, recouverte d'une couche métallique 34, par exemple en tungstène.

On dépose ensuite sur l'ensemble (cf Fig. 5) une couche de résine ou d'isolant 36 dans laquelle on grave deux caissons 38₁ et 38₂.

En prenant la couche métallique 34 comme électrode, on remplit ces caissons par croissance électrolytique, pour obtenir deux pièces magnétiques 40₁, 40₂ comme représenté sur la figure 6.

Le procédé se poursuit alors par des opérations bien connues de l'homme de l'art : formation d'un élément magnétorésistant, formation d'un mur isolant, croissance des pièces polaires de part et d'autre du mur. La tête finalement obtenue est représentée sur la figure 7 avec ses deux pièces polaires 22₁, 22₂, séparées par l'espaceur amagnétique 24 et l'élément magnétorésistant MR. Ce dernier est placé sous l'espaceur, soit sous les pièces polaires comme illustré, soit entre celles-ci.

## Revendications

1. Tête magnétique comprenant un circuit magnétique avec deux concentrateurs magnétiques (19₁, 19₂), deux pièces polaires (22₁, 22₂) séparées par un espaceur amagnétique (24) et un élément magnétorésistant (MR) situé sous l'espaceur amagnétique (24, caractérisée par le fait que les deux concentrateurs (19₁, 19₂) sont séparés des deux pièces polaires (40₁, 40₂, 22₁, 22₂) par une couche amagnétique (30) comprenant au moins une couche métallique (34).

2. Tête magnétique selon la revendication 1, caractérisée par le fait que la couche amagnétique (30) comprend une couche isolante (32) recouverte par ladite couche métallique (34).

3. Tête magnétique selon la revendication 1, caractérisée par le fait que la couche amagnétique (30) présente une épaisseur comprise entre une fraction de micromètre et quelques micromètres.
